# EUROPÄISCHE PATENTSCHRIFT

(11) **EP 1 915 972 B1**
(45) Veröffentlichungstag und Bekanntmachung des Hinweises auf die Patenterteilung: **08.08.2012**
(21) Anmeldenummer: 07019093.9
(22) Anmeldetag: 27.09.2007
(51) Int. Cl.: A61C 13/20, F27B 17/02, F27D 21/00

(54) **Verfahren zum Betrieb eines Brennofens, insbesondere für den Dentalbereich, sowie Brennofen**
Method for operating a furnace, in particular for dental use, and furnace
Procédé destiné au fonctionnement d'un fourneau, en particulier pour le domaine dentaire, ainsi que fourneau

(30) Priorität: 23.10.2006 DE 102006049848
(43) Veröffentlichungstag der Anmeldung: 30.04.2008
(73) Patentinhaber: Ivoclar Vivadent AG, 9494 Schaan (LI)
(72) Erfinder: Jussel, Rudolf, 6806 Feldkirch-Tosters (AT)
(74) Vertreter: Baronetzky, Klaus

(56) Entgegenhaltungen:
- EP-A- 0 191 350
- US-A- 5 981 919
- US-A1- 2002 008 334
- US-B1- 6 855 916

## Beschreibung

Die Erfindung betrifft ein Verfahren zum Betrieb eines Brennofens, insbesondere für den Dentalbereich, sowie einen entsprechenden Brennofen gemäß dem Oberbegriff der Ansprüche 1 und 13.

Bei Dental-Brennöfen kommt es darauf an, die Temperatur und auch das sogenannte Temperaturprofil, also den Verlauf der Temperatur über die Zeit, möglichst genau einzuhalten, denn die Qualität der erzeugten Dentalrestaurationsteile, zu denen sowohl gegossene, also metallische Dentalrestaurationsteile als auch Sinterteile gehören können, hängt in starkem Maße davon ab.

Insbesondere bei Sinterungen sind die Sinterbedingungen entscheidend, um die gewünschten Materialeigenschaften des gesinterten Dentalmaterials, das beispielsweise in einem Pressofen verpresst wird, zu erzielen. Hierzu gehört die Festigkeit des Restaurats, aber auch die Transluzenz, gerade bei Kronen und Verblendkeramiken.

Andererseits hängt das Temperaturprofil bei den bekannten Dentalbrennöfen stark von verschiedenen Faktoren ab. Dementsprechend ist es seit längerem bekannt, dass die störenden Einflüsse kompensiert werden müssen. So zeigt beispielsweise die DE-A1-28 56 304 ein Gießgerät für Dentalgüsse mit einer entsprechenden Steuereinrichtung, die Spannungsschwankungen der Netzspannung kompensieren kann, und so ein gleichmäßigeres Heizergebnis bereitstellt.

Ferner ist es seit längerem bekannt, eine Temperaturregelung zu realisieren, die heutzutage nahezu bei jedem Dentalbrennofen verwirklicht ist, und mit der eine möglichst genaue Regelung der Isttemperatur an die Solltemperatur realisiert wird. Damit soll beispielsweise die gespeicherte Energie in der Wärmeisolation, der sich ändernde Wicklungswiderstand der Heizwicklung, aber beispielsweise auch die in der Muffel eingebrachte Masse und die hiermit verbundene Temperatursenkung so weit wie möglich kompensiert werden.

In Dentallabors, aber auch in größeren Zahnarztpraxen, die derartige Dentalbrennöfen verwenden, ist es wünschenswert, eine möglichst geringe Zykluszeit für die Bereitstellung eines Dentalrestaurats zu erzielen.

Es ist vorgeschlagen worden, das Aufheizen des Brennofens über eine spezielle Aufheizkurve erfolgen zu lassen, die mit einem recht raschen Temperaturanstieg auf eine sogenannte Übertemperatur den Ofen zunächst für eine gewisse Zeit auf eine Temperatur aufheizt, die deutlich insbesondere oberhalb der Verarbeitungstemperatur, also der gewünschten Temperatur, bei der das Restaurat verarbeitet werden soll, liegt. Dieses Verfahren kann man auch als Overriding bezeichnen. Es schädigt bei richtiger Wahl der Parameter (Temperatur, Zeit) das Restaurat nicht, denn aufgrund der Wärmekapazität der Muffel wärmt sich diese während der Haltezeit der Übertemperatur rascher auf, ohne jedoch ihre Verarbeitungstemperatur zu erreichen. Kurz bevor die Verarbeitungstemperatur in der Muffel erreicht wird, könnte man die Ofentemperatur auf die Verarbeitungstemperatur absenken.

Um dies zu erreichen, ist es auch vorgeschlagen worden, eine sogenannte, Haltezeit festzulegen, während welcher der Ofen auf der Übertemperatur gehalten wird, während er anschließend definiert auf die Verarbeitungstemperatur heruntergefahren wird.

Leider hat sich die so verbesserte Zykluszeit und das hiermit verbundene Verfahren in Tests nicht bewährt. Aufgrund verschiedener Ursachen kommt es immer wieder zur Schädigung der Keramik, vermutlich aufgrund von Übertemperaturen, so dass derartige Öfen trotz der erzielten Zykluszeitverbesserung gemeinhin als nicht gut beherrschbar bzw. riskant angesehen werden.

Um eine Zykluszeitverbesserung zu erzielen, ohne dass der betreffende Ofen die Sinterkeramik schädigen könnte, ist es ferner vorgeschlagen worden, mit einem sehr hohen, aber sehr kurzzeitigen Heizimpulus zumindest eine gewisse Reduktion der Anheizphase zu erzielen. Dies lässt sich andererseits nur mit speziell ausgerüsteten und besonders temperaturfesten Öfen realisieren, bei denen beispielsweise auch eine Temperatur von 1400°, anstelle der typischen Übertemperatur von 1150°, ohne Schädigung des Ofens realisierbar ist.

Typischerweise müssen bestimmte Keramiken auch mehrmals gebrannt werden. So ist es bekannt, eine hochbrennende Keramik, also eine Keramik, die beispielsweise im Temperaturbereich zwischen 900°C und 940°C gesintert wird, zunächst über einen sogenannten Dentinbrand zu brennen, und nach Abkühlung hieran einen sogenannten Glanzbrand anzuschließen, dessen Temperatur beispielsweise 20°C niedriger als die Temperatur des Dentinbrands ist. Bei derartigen, noch vergleichsweise häufigen Brennprozeduren sind insofern zwei Aufheizphasen notwendig, was die Signifikanz der Aufheizphase für die gesamte Qualität entsprechend erhöht.

Daher liegt der Erfindung die Aufgabe zugrunde, ein Verfahren zum Betrieb eines Brennofens, insbesondere für Dentalkeramiken, gemäß dem Oberbegriff von Anspruch 1 sowie einen entsprechenden Brennofen, gemäß dem Oberbegriff von Anspruch 13 zu schaffen, der hinsichtlich der Zykluszeit verbessert ist, ohne dass die Gefahr bestände, dass die Qualität des Restaurats reduziert wäre und mit dem Restaurate gleichbleibender Qualität herstellbar sind.

US 5 981 919 offenbart ein Verfahren und einen Brennofen gemäß Oberbegriff der Ansprüche 1 und 13.

Dieser Aufgabe wird erfindungsgemäß durch Anspruch 1 bzw. 13 gelöst. Vorteilhafte Weiterbildungen ergeben sich aus den Unteranspruchen.

Erfindungsgemäß ist es vorgesehen, eine Übertemperatur in einem vorgegebenen Temperaturprofil zu realisieren, die oberhalb insbesondere der Verarbeitungstemperatur liegt. Die erfindungsgemäße Übertemperatur wird jedoch nicht etwa für eine vorgegebene Haltezeit gehalten, wie es bereits vorgeschlagen worden ist. Vielmehr wird ein bestimmtes Flächenintegral berechnet, nämlich das Integral der Differenz zwischen aktueller Ofentemperatur und Bezugstemperatur insbesondere einer Transformationstemperatur einer Keramik - soweit dieser Wert positiv ist - integriert über die Zeit. Sobald ein vorgegebener Integralwert, die sogenannte Temperaturzeitflache, erreicht ist, erfolgt eine Abschaltung

Überraschend zeigt es sich, dass mit der Maßnahme, die Temperaturzeitfläche festzulegen, verschiedene Störparameter automatisch kompensiert werden können: bei reduzierter Netzspannung ist der Temperaturanstiegsgradient der Aufheizzeit geringer. Damit dauert es länger, bis die Übertemperatur erreicht ist. Erfindungsgemäß wird nun anstelle einer vorgegebenen Haltezeit auf der Übertemperatur die Temperaturzeitfläche vorgegeben, was überraschend zu einem Aüfheizverlauf der Muffel führt, der gegenüber der optimalen Aufheizkurve lediglich um einige Sekunden verzögert ist, aber jedenfalls keineswegs ein Überschwingen zeigt. Schädigungen des Restaurats werden so sicher vermieden, obwohl die Aufheizperiode nicht nur im störungsfreien Fall, sondern insbesöndere auch im Störfall deutlich verkürzt ist, so dass die Zykluszeit insgesamt.

Zwar ist es an sich bereits vorgeschlagen worden, in einem Metallgießofen eine Temperatursteuerung so zu programmieren, dass eine Überhitzungstemperatur während des eigentlichen Schmelzvorgangs eingesetzt wird, die um eine vorgegebene Temperaturdifferenz höher als die Endtemperatur ist. Nach Ablauf einer Schmelzzeitverzögerung wird.dann die Endtemperatur angesteuert. Dieses Verfahren berücksichtigt jedoch nicht unterschiedliche Fehlerparameter, so dass die vorstehend genannten Probleme ebenfalls auftreten können.

Erfindungsgemäß besonders günstig ist es, dass durch die Festlegung des Differenzintegrals als Steuergröße für das Temperaturprofil auch die eingebrachte Wärmekapazität automatisch mit in die Regelung einfließt. So bedingt eine größere Muffel mit dementsprechend größerer Wärmekapazität eine langsamere Temperaturzunahme im Inneren des Ofens, was ein dort angebrachter Temperatursensor erfassen kann. Die zugeführte Wärmemenge wird insofern automatisch hieran angepasst, wobei es sich versteht, dass die eigentliche Regelung, also der innere Ofenregelkreis in geeigneter Weise realisiert sein kann, beispielsweise als PID-Regler.

Ferner versteht es sich, dass der erfindungsgemäße Ofen in an sich bekannter Weise kalibriert werden kann, und zwar bevorzugt einerseits mit einer großen und andererseits mit einer kleinen Muffel, wobei die genaue Anordnung des Temperatursensors auch so festgelegt werden kann, dass die Regeldifferenz zwischen dem Soll- und dem Istwert möglichst gering ist, und zwar sowohl bei der großen als auch bei der kleinen Muffel, die als Testmuffel beispielsweise mit einem zusätzlichen, innen vorgesehenen Temperaturfühler versehen sein kann, der die tatsächliche Temperatur in der Muffel misst.

In vorteilhafter Ausgestaltung ist es vorgesehen, über einen Mikroprozessor oder Mikrocontroller die Temperatursteuerung insbesondere während der kritischen Aufheizphase vorzusehen. Die Berechnung des Differenzintegrals, also der Temperaturzeitfläche, kann dann bevorzugt numerisch mit diskreten je gemessenen Temperaturwerten erfolgen. Die Abtastrate kann in weiten Bereichen an die Erfordernisse angepasst werden, wobei eine Abtastrate im Sekundenbereich auf jeden Fall ausreichend ist.

Es versteht sich, dass der erfindungsgemäße Brennofen grundsätzlich als Brennofen im engeren Sinne als auch als Pressofen realisierbar ist. Durch die optimierte Temperaturführung lässt sich die Zykluszeit minimieren, obwohl bei Verwendung von Keramiken für ein Dentalrestaurat als Brenngut die Sinterung in optimaler Weise erfolgen kann. Der erfindungsgemäße Brennofen kompensiert hinsichtlich der Aufheizphase ebenfalls gleichsam automatisch eine Erhöhung des Wicklungswiderstandes der Heizwicklung, und trägt auch der in der Warmeisolation gespeicherten Wärmeenergie Rechnung. Auch Störgrößen wie die Beeinflussung über das Evakuieren und erneute Fluten der Brennkammer mit Luft lassen sich erfindungsgemäß kompensieren, ebenso wie auch kurzzeitige Schwankungen der Netzspannung.

Erfindungsgemäß besonders günstig ist es, dass die Temperatursteuerung die Aufheizkurve des Brennofens überwacht und ggf. korrigiert.

Erfindungsgemäß besonders günstig ist es, dass der Brennofen durch die Temperatursteuerung auf eine Übertemperatur aufgeheizt wird, die über der Verarbeitungstemperatur liegt und dass die Übertemperatur während einer Haltezeit gehalten wird, wobei die Temperatursteuerung die Haltezeit ggf. verkürzt. ,

Erfindungsgemäß besonders günstig ist es, dass das Integral oberhalb insbesondere der Verarbeitungstemperatur berechnet wird.

Erfindungsgemäß besonders günstig ist es, dass das Integral aus, einer Vielzahl von diskreten gemessenen Temperaturwerten angenähert wird.

Erfindungsgemäß besonders günstig ist es, dass die Temperatur, die für die Regelung über die Temperatursteuerung verwendet wird, an einem Regeltemperatursensor, insbesondere einem Thermoelement, gemessen wird, das insbesondere von einer Pressmuffel, die in dem Brennofen eingesetzt ist, beabstandet ist.

Erfindungsgemäß besonders günstig ist es, dass die Solltemperatur des Ofens, ausgehend von einer Vorwärmtemperatur, mit einem vorgegebenen Temperaturgradienten auf die Übertemperatur 10 geregelt wird und nach Ablauf der durch die Temperatursteuerung vorgegebenen Haltezeit von der Übertemperatur 10 auf die Verarbeitungstemeratur geregelt wird, insbesondere mit einem vorgegebenen Temperaturgradienten.

Erfindungsgemäß besonders günstig ist es, dass der Aufheiz-Temperaturgradient steiler als der Temperaturgradient zwischen der Übertemperatur 10 und der Verarbeitungstemperatur 16 ist.

Erfindungsgemäß besonders günstig ist es, dass das Integral der Ofentemperatur, so weit sie die Verarbeitungstemperatur 16 übersteigt, über die Zeit ermittelt wird und mit einem Soll -Integral verglichen wird, das einer zugeführten Soll-Wärmemenge entspricht.

Erfindungsgemäß besonders günstig ist es, dass die Berechnung des Integrals beim Beenden der Haltezeit, entsprechend dem Verlassen der Übertemperatur 10 insbesondere abgebrochen wird.

Erfindungsgemäß besonders günstig ist es, dass die erfindungsgemäße Temperatursteuerung zusätzlich zu der eigentlichen Regelung der Ofentemperatur mit der Minimierung des Abstands zwischen Ist- und Soll-Temperatur vorgenommen wird.

Erfindungsgemäß besonders günstig ist es, dass der Anstiegs-Tem peraturgradient überwacht wird und beim Unterschreiten,eines vorgegebenen Wertes ein Alarm ausgegeben wird.

Erfindungsgemäß besonders günstig ist es, dass die Temperatursteuervorrichtung das Temperatur-Zeit-Integral oberhalb insbesondere einer Verarbeitungstemperatur 16 erfasst und dass die Temperatursteuerungvorrichtung den Brennofen auf eine Übertemperatur 10 aufheizt, die über der Verarbeitungstemperatur 16 liegt und die Temperatursteuervorrichtung den Brennofen während einer Haltezeit auf dieser Übertemperatur 10 hält.

Erfindungsgemäß besonders günstig ist es, dass der Brennofen als Pressofen ausgebildet ist.

Weitere Vorteile, Einzelheiten und Merkmale ergeben sich aus der nachfolgenden Beschreibung eines Ausführungsbeispiels der Erfindung anhand der Zeichnung.

Es zeigt:

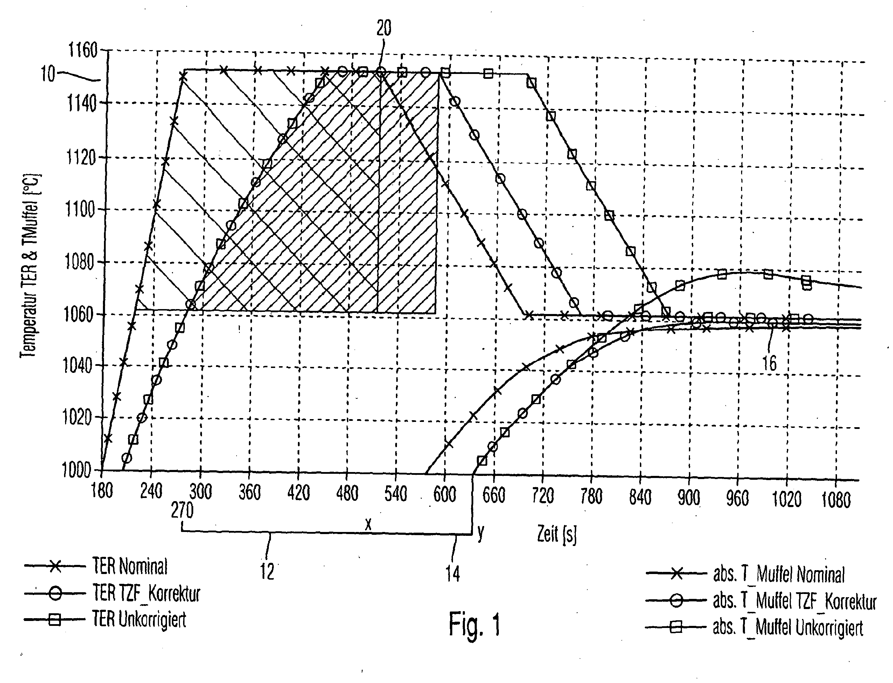

- Fig. 1: eine Darstellung von verschiedenen Temperaturprofilen zur Erläuterung des Betriebsverfahrens eines erfindungsgemäßen Brennofens.

In Fig. 1 ist die Temperatur über der Zeit aufgetragen, und zwar während einer Aufheizperiode des Brennzyklus eines erfindungsgemäßen Brennofens in einer Ausführüngsform. Hierbei ist im linken Bereich von Fig. 1 die Ofentemperatur in verschiedenen Temperaturprofilen dargestellt, die mit TER bezeichnet ist, während im rechten Bereich die Muffeltemperatur, die über eine Testmuffel ermittelt wurde, dargestellt ist., Diese ist mit T_Muffel bezeichnet.

Über einen Vorwärmofen wird eine Muffel typischerweise auf eine Temperatur von beispielsweise 800°C oder 850°C gebracht. Bei Entnahme aus dem Vorwärmofen und für das Verbringen in den Brennofen sinkt die Temperatur typischerweise ab, und zwar meist um mehrere 10°C, wobei eine kleinere Muffel eine stärkere Abkühlung als auch größere Muffel zeigt. Die Starttemperatur im Brennofen für die betreffende Muffel ist bei einer kleineren Muffel dementsprechend typischerweise geringer und bei einer größeren Muffel höher. Andererseits erwärmt sich die kleiner Muffel automatisch stärker, was diese Temperaturdifferenz in gewissem Maße kompensiert.

In Fig. 1,ist mit der Kurve TER Nominal eine Ofentemperatur bezeichnet, die der Brennofen in dem Fall durchläuft, dass kein Fehler vorliegt. Wie ersichtlich ist, erfolgt der Temperaturanstieg von 1000°C bis etwa 1150°C Celsius mit einem großen Temperaturgradienten von etwa 100°C Celsius/min. Nachdem die Übertemperatur 10 erreicht ist, schließt sich die Nenn-Haltezeit 12 von vier Minuten an. Hieran schließt sich eine Abkühlphase 14 von etwa drei Minuten an, bis die Verarbeitungstemperatur 16 von 1060°C erreicht ist.

Die nominale Muffeltemperatur ergibt sich bei diesem Aufheiz-Temperaturprofil, wie es in Fig. 1 dargestellt ist. Während des Aufheizzeitbereichs, in der die Ofentemperatur deutlich oberhalb der Verarbeitungstemperatur 16 liegt, ist die Muffeltemperatur unterhalb von 1040°, also jedenfalls unterhalb der Verarbeitungstemperatur. Erfindungsgemäß wird insofern eine definierte Wärmemenge zugeführt, die einerseits das Aufheizen der Muffel beschleunigt, aber andererseits keine Temperaturerhöhung über, die Verarbeitungstemperatur hinaus nach sich zieht.

Aus Fig. 1 ist ferner ersichtlich, wie in einem Störfall der erfindungsgemäße Brennofen reagiert. Der angenommene Störfall sei eine zu geringe Netzspannung, die dazu führt, dass der Ofen zu wenig Leistung erhält, um die erwünschte rasche Aufheizung der Ofentemperatur zu erreichen. In diesem Fall ergibt sich das Temperaturprofil TER TZF_Korrektur. Der Temperaturgradient ist deutlich geringer als 100°C/min und liegt beispielsweise unterhalb der Verarbeitungstemperatur 16 bei 50°C/min. Mit noch weiter zunehmender Temperatur schaffe der Brennofen nicht einmal mehr diesen Temperaturgradienten, so dass bei Annäherung an die Übertemperatur 10 der Temperaturgradient beispielsweise lediglich 30°C/min betragen kann. Dies führt insgesamt zu einer deutlich verlangsamten Aufheizung, so dass die Übertemperatur 10 erst bei etwa 450 Sekunden erreicht ist.

Erfindungsgemäß wird jedoch die Haltezeit der Temperatur deutlich verkürzt, und zwar auf knapp 2 1/2 Minuten. Hieran schließt sich in üblicher Weise die Abkühlphase von 3 Minuten an.

Entsprechend der Kurve T_Muffel TZF_Korrektur führt dies zu einer zwar etwas verzögerten Aufheizung der Muffel, deren Temperatur jedoch eindeutig nie die Verarbeitungstemperatur 16 überschreitet, so dass kein Fehlbrand entsteht.

Erfindungsgemäß wird dies sichergestellt durch die Berechnung des Differenzintegrals der Ofentemperatur über die Zeit, soweit die Ofentemperatur die Verarbeitungstemperatur übersteigt. Das Integral wird bis zum Abschaltzeitpunkt 20 der Übertemperatur berechnet und sowohl für die Nominaltemperatur als auch für die Ofentemperatur TZF_Korrektur schraffiert dargestellt. Die entsprechenden Temperaturzeitflächen sind gleich, woraus sich entsprechend der Kurve TZF_Korrektur eine reduzierte Haltezeit ergibt.

Aus Fig. 1 ist ferner ein Temperaturverlauf ersichtlich, der erfindungsgemäß vermieden werden soll. Hierbei erfolgt keine Kompensation des Ofenfehlers, so dass der Temperaturanstieg entsprechend dem Temperaturverlaufs TZF_Korrektur, wie es unter TER unkorrigiert dargestellt ist, erfolgt. Hieran schließt sich die Haltezeit von 4 Minuten an, so dass die Abschaltung bei 690 Sekunden vorgenommen wird. Zu diesem Zeitpunkt beträgt die Muffeltemperatur etwa 1025°C, ist also noch deutlich unterhalb der Verarbeitungstemperatur 16. Während der Abkühlphase von 3 Minuten erfolgt jedoch ein Überschießen der Temperatur über die Verarbeitungstemperatur hinaus, und zwar kurz vor deren Ende, wobei sich überraschend noch für eine längere Zeit, also über 1080 Sekunden hinaus, eine zu hohe Temperatur ergibt, die die Keramik, wie es bei T_Muffel unkorrigiert dargestellt ist, nachhaltig schädigt.

Die erfindungsgemäße Lösung vermeidet in überraschend einfacher Weise diese Schädigung vollständig und erlaubt einen sicheren Betrieb eines Brennofens trotz einer Reduktion der Zykluszeit.

## Patentansprüche

1. Verfahren zum Betrieb eines Brennofens, insbesondere für den Dentalbereich, bei welchem die Temperatur gemessen und basierend auf der gemessenen Temperatur eine Temperatursteuerung realisiert wird,
**dadurch gekennzeichnet, dass** das an diskreten Punkten erfasste Integral der Differenz zwischen aktueller Ofentemperatur und einer Bezugstemperatur über die Zeit bis zu einem Abschaltzeitpunkt ermittelt und insbesondere abgespeichert wird, und, zusätzlich zur erfassten aktuellen Temperatur, für die Steuerung des Brennofens verwendet wird.

2. Verfahren zum Betrieb eines Brennofens nach Anspruch 1, **dadurch gekennzeichnet, dass** die Temperatursteuerung die Aufheizkurve des Brennofens überwacht und ggf. korrigiert.

3. Verfahren nach einem der vorhergehenden Ansprüche, **dadurch gekennzeichnet, dass** der Brennofen durch die Temperatursteuerung auf eine Übertemperatur aufgeheizt wird, die über der Verarbeitungstemperatur liegt und dass die Übertemperatur während einer Haltezeit gehalten wird, wobei die Temperatursteuerung die Haltezeit ggf. verkürzt.

4. Verfahren nach einem der vorhergehenden Ansprüche, **dadurch gekennzeichnet, dass** das Integral oberhalb insbesondere der Verarbeitungstemperatur berechnet wird.

5. Verfahren nach einem der vorhergehenden Ansprüche, **dadurch gekennzeichnet, dass** das Integral aus einer Vielzahl von diskreten gemessenen Temperaturwerten angenähert wird.

6. Verfahren nach einem der vorhergehenden Ansprüche, **dadurch gekennzeichnet, dass** die Temperatur, die für die Regelung über die Temperatursteuerung verwendet wird, an einem Regeltemperatursensor, insbesondere einem Thermoelement, gemessen wird, das insbesondere von einer Pressmuffel, die in dem Brennofen eingesetzt ist, beabstandet ist.

7. Verfahren nach einem der vorhergehenden Ansprüche, **dadurch gekennzeichnet, dass** die Solltemperatur des Ofens, ausgehend von einer Vorwärmtemperatur, mit einem vorgegebenen Temperaturgradienten auf die Übertemperatur (10) geregelt wird und nach Ablauf der durch die Temperatursteuerung vorgegebenen Haltezeit von der Übertemperatur (10) auf die Verarbeitungstemeratur geregelt wird, insbesondere mit einem vorgegebenen Temperaturgradienten.

8. Verfahren nach Anspruch 7, **dadurch gekennzeichnet, dass** der Aufheiz-Temperaturgradient steiler als der Temperaturgradient zwischen der Übertemperatur (10) und der Verarbeitungstemperatur (16) ist.

9. Verfahren nach einem der vorhergehenden Ansprüche, **dadurch gekennzeichnet, dass** das Integral der Ofentemperatur, so weit sie die Verarbeitungstemperatur (16) übersteigt, über die Zeit ermittelt wird und mit einem Soll-Integral verglichen wird, das einer zügeführten Soll-Wärmemenge entspricht.

10. Verfahren nach Anspruch 8, **dadurch gekennzeichnet, dass** die Berechnung des Integrals beim Beenden der Haltezeit, entsprechend dem Verlassen der Übertemperatur (10) abgebrochen wird.

11. Verfahren nach einem der vorhergehenden Ansprüche, **dadurch gekennzeichnet, dass** die Temperatursteuerung zusätzlich zu der eigentlichen Regelung der Ofentemperatur mit der Minimierung des Abstands zwischen Ist- und Soll-Temperatur vorgenommen wird.

12. Verfahren nach einem der vorhergehenden Anspruche, **dadurch gekennzeichnet, dass** der Anstiegs-Temperaturgradient überwacht wird und beim Unterschreiten eines vorgegebenen Wertes ein Alarm ausgegeben wird.

13. Brennofen, insbesondere für den Dentalbereich, mit einer Temperatursteuervorrichtung zum Messen und Steuern und/oder Regeln der Temperatur im Innenraum des Bodens,
**dadurch gekennzeichnet, dass** die Temperatursteuervorrichtung geeignet ist, das Integral der Differenz zwischen aktueller Ofentemperatur und einer Bezugstemperatur über die Zeit bis zu einem Abschaltzeitpunkt zu ermitteln, und insbesondere abzuspeichern, und zusätzlich zur erfassten aktuellen Temperatur, den Brennofen basierend hierauf zu steuern.

14. Brennofen nach Anspruch 13, **dadurch gekennzeichnet, dass** die Temperatursteuervorrichtung das Temperatur-Zeit-Integral oberhalb einer Verarbeitungstemperatur (16) erfasst und dass die Temperatursteuerungvorrichtung geeignet ist, den Brennofen auf eine Übertemperatur (10) aufzuheizen, die über der Verarbeitungstemperatur (16) liegt und die Temperatursteuervorrichtung geeignet ist, den Brennofen während einer Haltezeit,auf dieser Übertemperatur (10) zu halten.

15. Brennofen nach einem der Ansprüche 13 oder 14, **dadurch gekennzeichnet, dass** der Brennofen als Pressofen ausgebildet ist.

## Claims

1. Method of operating a furnace, in particular for dental use, in which the tempera ture is measured and based on the temperature measured a temperature control is realized **characterized in that** the integral recorded at discrete points of the difference between the present temperature of the furnace and a reference temperature is determined over time until a turn-off time is reached and is in particular stored, and, in addition to the present temperature recorded is used for controlling the furnace.

2. Method of operating a furnace according to claim 1, **characterized in that** the tem perature control monitors the heating curve of the furnace and corrects it, if necessary

3. Method according to any of the foregoing claims **characterized in that** the furnace is heated to an overheat by the temperature control which overheat s higher than the pro cessing temperature and that the overheat is held for a hold time wherein the temperature control shortens the hold time if necessary

4. Method according to any of the foregoing claims **characterized in that** the integral is calculated above the processing temperature

5. Method according to any of the foregoing claims, **characterized in that** the integral is approached from a plurality of discrete measured temperature values

6. Method according to any of the foregoing claims **characterized in that** the tem perature which is used for the closed loop control via the temperature control is measured at a closed loop control temperature sensor in particular a thermocouple which is spaced apart in particular from an investment ring which is introduced into the furnace

7. Method according to any of the forego ng claims, **characterized in that** the set tem perature of the furncace based on a pre heating temperature is closed-loop controlled to the overheat (10) using a predetermined temperature gradient and after expiry of the hold time which is predetermined by the temperature control is closed loop controlled from the over heat (10) to the processing temperature in particular using a predetermined temperature gradient.

8. Method according to claim 7 **characterized in that** the heating temperature gra dient s steeper than the temperature gradient between the overheat (10) and the processing temperature (16)

9. Method according to any of the foregoing claims **characterized in that** the integral of the furnace temperature as far as it exceeds the processing temperature (16) is deter mined over time and compared to a nominal integral which corresponds to a supplied nominal heat quantity.

10. Method according to claim 8, **characterized in that** the calculation of the integral when finish ng the hold time, corresponding to leaving the overheat (10), is cancelled.

11. Method according to any of the foregoing claims, **characterized in that** the temperature control is realized, in addition to the acutal closed loop control of the furnace temperature by minimizing the gap between actual and nominal temperature

12. Method according to any of the foregoing claims, **characterized in that** the growth temperature gradient is monitored and that an alarm is given when it falls below a predetermined value.

13. Furnace, in particular for dental use comprising a temperature control device for measuring and controlling and/or closed-loop controlling the temperature in the interior of the bottom, **characterized in that** the temperature control dev ce is suitable for determining the integral of the difference between the present furnace temperature and a reference tempera ture over time until a turn-off time is reached and n particular for storing, and in addition to the recorded present temperature for controlling the furnace based on this.

14. Furnace according to claim 13, **characterized in that** the temperature control device records the temperature time-integral above a processing temperature (16) and that the temperature control device is suitable for heating the furnace to an overheat (10) which is higher than the processing temperature (16) and that the temperature control device is suitable for holding the furnace during a hold time at this overheat (10).

15. Furnace according to claims 13 or 14 **characterized in that** the furnace is formed as a press furnace.

## Revendications

1. Procédure pour le fonctionnement d'un four en particulier pour une application dentaire, ou la température est mesurée et basee sur la température mesurée, une commande de la température est effectue, **caractérisée en ce que** l'intégrale de la différence entre la température réelle du four et une température de référence sur la période jusqu'à une extinction du four est calculée a des points discrets et de préférence stockee et elle est utilisée en plus de la température actuelle pour commander le four

2. Procédure pour le fonctionnement d un four selon la revendication 1, **caractérisée en ce que** la commande de la température surveille la courbe de chauffage du four et le cas échéant la corrige.

3. Procédure selon l'une des revendications précédentes, **caractérisée en ce que** le four est chauffe par la commande de la température a une sur température qui est située au-dessus de la température de traitement et que la sur-température est maintenue pendant une période de temporisation ou la commande de la température raccourcit le cas échéant le temps de temporisation.

4. Procédure selon l'une des revendications précédentes, **caractérisée en ce que** l'intégrale est calculée au dessus de la température de traitement.

5. Procédure selon l'une des revendications précédentes **caractérisée en ce que** l'intégrale est approximée a partir d un nombre de valeurs de température mesurées separement

6. Procédure selon l'une des revendications précédentes, **caractérisée en ce que** la température utilisée pour la régulation par la commande de la température, est mesurée sur un capteur de température de commande, en particulier un thermocouple, qui est en particulier distancé par un moufle de pressée placé dans le four

7. Procédure selon l'une des revendications précédentes **caractérisée en ce que** la température prédéterminée du four est régulée a partir d une température de prechauffage sur la sur-température (10), selon un gradient de la température prédétermine, et une fois que la période de temporisation donne par la commande de la température est écoulée elle est régulée de la sur température (10) a la température de traitement, en particulier avec un gradient de température prédéterminée.

8. Procédure selon l'une des revendications précédentes **caractérisée en ce que** le gradient de la température de préchauffage est plus raide que le gradient de la température entre la sur température (10) et la température de traitement (16)

9. Procédure selon l'une des revendications précédentes, **caractérisée en ce que** l'in tégrale de la température du four, si elle depasse la température de traitement (16), est de terminé par le temps écoulé et compare avec une intégrale prédeterminée qui correspond a une quantité de chaleur fournie prédéterminée

10. Procédure selon la réclamation 8 **caractérisé en ce que** le calcul de l'intégrale est interrompu par la fin de la période de temporisation, correspondant avec le depart de la sur-température (10)

11. Procédure selon l'une des revendications précédentes, **caractérisée en ce que** la commande de la température en plus du réglage de la température du four en soi est effectuée avec la minimisation de la distance entre la température réelle et définie

12. Procédure selon l'une des revendications précédentes **caractérisée en ce que** l'augmentation du gradient de la température de chauffe est contrôlée et une alerte est émise si elle tombe au-dessous d une valeur prédéfinie

13. Four en particulier pour une application dentaire, avec un dispositif de commande de la température pour la mesure et la commande et/ou le réglage de la température a l'inté rieur du fond, **caractérisée en ce que** le dispositif de commande de la température est en me sure de calculer l'intégrale de la différence entre la température réelle de four et une tem pérature de référence sur la période jusqu'à une extinction du four et en particulier de la stocker et en plus de capter la température réelle, de commander le four sur la base de celle-ci.

14. Four selon la revendication 13, **caractérisé en ce que** le dispositif de commande de la température capte l'intégrale de température temps au-dessus d'une température de traitement (16) et que le dispositif de commande de la température est en mesure de chauffer le four a une sur-température (10), qui est supérieure a la température de traitement (16) et que le dispositif de commande de la température est en mesure de maintenir le four pendant une période de temporisation sur cette sur-température (10)

15. Four selon l'une des revendications précédentes 13 ou 14 **caractérisée en ce que** le four est forme comme four de pressée
